# EUROPEAN PATENT SPECIFICATION

(11) **EP 1 749 710 B1**
(45) Date of publication and mention of the grant of the patent: **16.06.2010**
(21) Application number: 06012648.9
(22) Date of filing: 20.06.2006
(51) Int. Cl.: B60R 21/34

(54) **Fender panel mounting structure of automobile**
Vorrichtung zur Befestigung einer Aufpralldämpfflügels
Dispositif de montage pour aile de carrosserie

(30) Priority: 05.08.2005 JP 2005228521
(43) Date of publication of application: 07.02.2007
(73) Proprietor: Mazda Motor Corporation, Aki-gun, Hiroshima 730-8670 (JP)
(72) Inventor: Okamoto, Kazuo, c/o Mazda Motor Corporation, Aki-gun, Hiroshima 730-8670 (JP); Matsuda, Yushi, c/o Mazda Motor Corporation, Aki-gun, Hiroshima 730-8670 (JP); Takasue, Tetsukan, c/o Mazda Motor Corporation, Aki-gun, Hiroshima 730-8670 (JP); Furumoto, Arihiro, c/o Mazda Motor Corporation, Aki-gun, Hiroshima 730-8670 (JP); Tosha, Hiromitsu, c/o Mazda Motor Corporation, Aki-gun, Hiroshima 730-8670 (JP); Ebisugi, Takashi, c/o Mazda Motor Corporation, Aki-gun, Hiroshima 730-8670 (JP); Kuroda, Susumu, c/o Mazda Motor Corporation, Aki-gun, Hiroshima 730-8670 (JP)
(74) Representative: Herrmann, Uwe

(56) References cited:
- JP-A- 2001 199 366
- JP-A- 2002 178 953
- JP-A- 2005 014 763

## Description

### Technical Field to which the Invention Belongs

The present invention relates to a fender panel mounting structure of an automobile.

### Related Background

Conventionally, a fender panel mounting structure of an automobile has been known which has a function of protecting a pedestrian as disclosed in Japanese Patent Application Laid Open Publication No. 2002-178953A. This fender panel mounting structure includes an impact absorption unit which includes extension parts attached and welded to the upper face of a fender shield panel (structural member), an upper part of which upper face is joined to the lower face of a bent part of a fender panel, and bent parts formed between the upper part and the respective extension parts for absorbing an impact. This structure reserves a sufficient space between the lower face of the bent part of the fender panel and the upper face of the fender shield panel, contemplating absorption of impact energy at a collision of a head or the like of a pedestrian from a diagonal front. As well as in this structure, any fender panel mounting structures for protecting pedestrians should be a crushable structure capable of being crushed when a head of a pedestrian collides (at head impact) so as to effectively absorb impact energy at the collision for involving no damage to the pedestrian.

Any of the following documents can be taken as basis for the preamble of independent claim 1.

JP2001/199366 discloses a fender structure for a car with mounting brackets which fasten the ends of the longitudinal wall of a fender panel to the upper wall of an apron member, thereby creating a gap which deforms when a force acts downwardly on said fender panel.

JP2005/014763 discloses a fender panel mounting structure for a motor vehicle, which mounts an inside vertical wall part of the fender panel to the upper wall of an apron member, thereby forming a gap between apron member and fender panel. The mounting structure is hut-shaped in its cross-section in the vehicle widthwise direction and the pair of legs is inclined at a predetermined angle to the inside of the vehicle. It deforms when a force acts on the fender panel.

### Disclosure of the Invention

### Problems that the Invention is to be Solve

In the conventional fender panel mounting structure of an automobile, however, when absorbency of the impact energy at a collision with a pedestrian is increased, the impact absorption unit cannot withstand a sideways load applied due to, for example, human's leaning to the fender panel, automobile washing, automobile waxing, or the like, being deformed to cause the fender panel to cave in readily in some cases.

The present invention is made in view of the foregoing and has its object of effectively absorbing impact energy so as to stabilize the direction in which the fender mounting bracket is collapsed at a collision with a pedestrian from a diagonal front and of ensuring rigidity against sideways force which would be applied to a fender panel.

### Means for Solving the Problems

In order to achieve the above object, in the present invention, the rigidity at the upper part of a fender mounting bracket is set smaller than that at the lower part thereof.

Specifically, the main aspect of the invention presupposes a fender panel mounting structure of an automobile for mounting a fender panel to a structural member of the automobile, wherein the fender panel mounting structure includes: a fender mounting bracket in a hat-like shape in section, the fender mounting bracket including a pair of grounding parts at a lower part thereof which are fixed in line in a lengthwise direction of a vehicle to the structural member, a fender mounting part at an upper part thereof to which the fender panel is mounted, and standing main bodies between the fender mounting part and the respective grounding parts, wherein at least one of a width and a thickness at upper parts of the standing main bodies of the fender mounting bracket is set smaller than that at lower parts thereof.

With the above structure, at least one of the width and the thickness at the upper parts of the standing main bodies of the fender mounting bracket is set smaller than that at the lower parts thereof to reduce the rigidity at the upper parts of the standing main bodies compared with the rigidity at the lower parts thereof. This readily causes plastic deformation of the upper parts of the standing main bodies at a collision with a pedestrian from a diagonal front. Also, the grounding parts of the fender mounting bracket are fixed in line in the lengthwise direction of the vehicle to the structural member of the automobile, so that the fender mounting bracket is collapsed in the lengthwise direction of the vehicle at a collision with a pedestrian from a diagonal front, thereby absorbing the impact energy efficiently. On the other hand, the rigidity at the lower parts of the standing main bodies is large compared with that at the upper parts thereof, so that the section modulus at the lower parts is also large. When the bending moment is applied to the fender mounting bracket by sideways load application at human's leaning to the fender panel or the like. However, with the large section modulus at the lower parts, the structure can withstand such bending moment application.

In a second aspect of the invention, when viewing the fender mounting bracket in the lengthwise direction of the vehicle, an angle formed between an inboard side face of each standing main body and a mounting face of the structural member is set smaller than an angle formed between an outboard side face of each standing main body and the mounting face of the structural member, and the width at the upper parts of the standing main bodies of the fender mounting bracket is set smaller than the width at the lower parts thereof.

With the above structure, the width at the upper parts of the standing main bodies is set smaller than that at the lower parts thereof, so that the upper parts of the standing main bodies are plastically deformed readily at a collision of a pedestrian from a diagonal front. Further, the grounding parts of the fender mounting bracket are fixed in line in the lengthwise direction of the vehicle to the structural member of the automobile, so that the fender mounting bracket is collapsed in the lengthwise direction of the vehicle at a collision with a pedestrian from a diagonal front, thereby absorbing the impact energy efficiently. On the other hand, the rigidity at the lower parts of the standing main bodies is large compared with that at the upper parts thereof, so that the section modulus at the lower parts is also large. When the bending moment is caused at the fender mounting bracket by sideways load application at human's leaning to the fender panel or the like. However, with the large section modulus at the lower parts, the structure can withstand such bending moment application.

Furthermore, the inboard side face of the fender mounting bracket is inclined outboard from the lower parts thereof, causing the fender mounting bracket to be hard to fall inboard at a collision of a pedestrian from a diagonal front.

In the third invention, at least a standing main body located on a rear side in the lengthwise direction of the vehicle is bent so as to form an edge lines extending in the car width direction.

With the above structure, the standing main body located at the rear side in the lengthwise direction of the vehicle of the fender mounting bracket is bent, so that the bent part at the edge line is deformed readily in the lengthwise direction of the vehicle at a collision with a pedestrian from a diagonal front.

In the fourth invention, the fender panel is joined to the fender mounting part of the fender mounting bracket by means of a joint member, and a bracket accommodating concave portion is formed in a surface portion of the structural member between the grounding parts, the bracket accommodating concave portion being capable of accommodating the joint member and the fender mounting bracket which has been plastically deformed upon impact application to the fender panel.

With the above structure, the joint member for fixing the fender panel to the fender mounting bracket is accommodated into the bracket accommodating concave portion together with the fender mounting bracket which has been plastically deformed upon impact application to the fender panel, thereby preventing the joint member and the fender mounting bracket from inhibiting impact energy absorption.

In the fifth invention, the fender panel is formed by molding a resin, and the fender mounting bracket is made of metal.

With the above structure, the metal fender mounting bracket has high rigidity to some extent. Hence, absorbency of the impact energy at a collision with a pedestrian is ensured even with the resin-molded fender panel of which rigidity is lowered for weight reduction.

### Effects of the Invention

As described above, in the first invention, at least one of the width and the thickness at the upper part of the fender mounting bracket is set smaller than that at the lower part thereof to reduce the rigidity at the upper part of the fender mounting bracket compared with that at the lower part thereof, thereby causing the upper part thereof to be readily plastically deformed at a collision with a pedestrian from a diagonal front and coping with the bending moment which would be applied by a sideways load. Hence, with the above simple structure, the direction in which the fender mounting bracket is collapsed at a collision with a pedestrian from a diagonal front can be stabilized, enabling efficient impact energy absorption. Further, the rigidity against sideways force which would be applied to the fender panel can be ensured.

In the second invention, the width at the upper part of the fender mounting bracket is set smaller than that at the lower part thereof, thereby causing the upper part thereof to be readily plastically deformed at a collision with a pedestrian from a diagonal front and coping with the bending moment which would be applied by a sideways load. Further, the inboard side face of the fender mounting bracket is inclined with respect to the mounting face of the structural member so that the fender mounting bracket is prevented from falling inboard at a collision with a pedestrian from a diagonal front. This attains efficient impact energy absorption without involving inhibition of deformation of the bonnet by the fender mounting brackets.

In the third invention, the standing main body at the rear side in the lengthwise direction of the vehicle is bent to form the edge line extending in the car width direction especially so that a part of the edge line is readily deformed in the lengthwise direction of the vehicle at a collision with a pedestrian from a diagonal front. This further stabilizes the direction in which the fender mounting bracket is collapsed at a collision with a pedestrian from a diagonal front and the impact energy can be absorbed efficiently because the fender mounting bracket does not inhibit deformation of the bonnet.

In the fourth invention, the bracket accommodating concave portion is formed in the surface portion of the structural member between the grounding parts of the fender mounting bracket so as to accommodate the joint member and the fender mounting bracket which has been plastically deformed upon impact application to the fender panel. Accordingly, the space for letting the joint member and the fender mounting bracket thereinto is ensured, enabling efficient absorption of the impact energy at a collision with a pedestrian from a diagonal front.

In the fifth invention, the fender panel is formed by molding a resin and the fender mounting bracket is made of metal. With this simple structure, the impact energy absorbency increases even with the resin-molded fender panel of which rigidity is lowered.

### Brief Description of the Drawings

FIG. **1** is a perspective view showing a front structure of an automobile which includes a fender panel mounting structure according to an embodiment of the present invention.
FIG. **2** is a perspective view showing in an enlarged scale the fender panel mounting structure.
FIG. **3** is a section taken along the line III-III in FIG. **2**.
FIG. **4** is a perspective view showing in an enlarged scale a fender mounting bracket and the periphery thereof.
FIG. **5** is a perspective view showing in an enlarged scale the fender mounting bracket.
FIG. **6** is a side section showing an aspect where a pedestrian collides from a diagonal front with a fender panel.
FIG. **7** is a side section showing in an enlarged scale a fender mounting part of the fender mounting bracket and the periphery thereof.

### Description of Embodiment

Embodiments of the present invention will be described below with reference to the accompanying drawings.

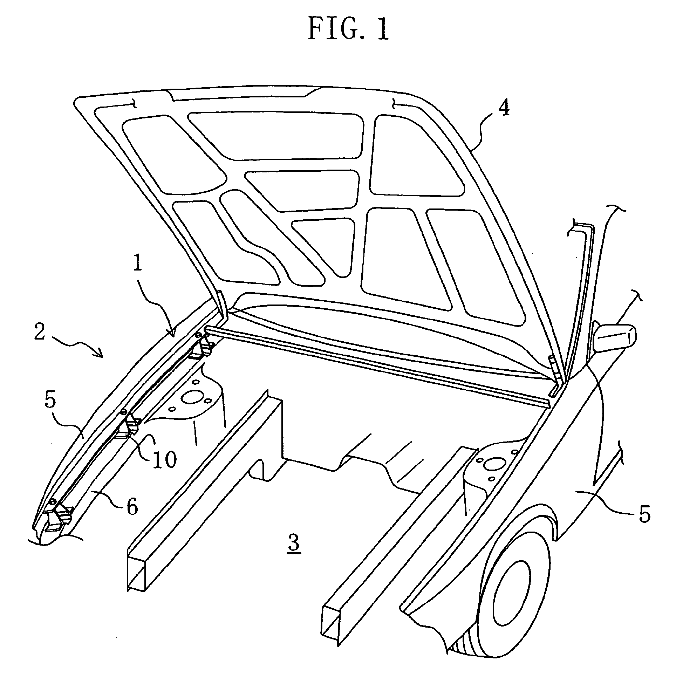

FIG. **1** shows a vehicle front part **2** of an automobile which includes a fender panel mounting structure **1** according to an embodiment of the present invention. The automobile includes a bonnet **4** which opens/closes freely for covering an engine room **3.**

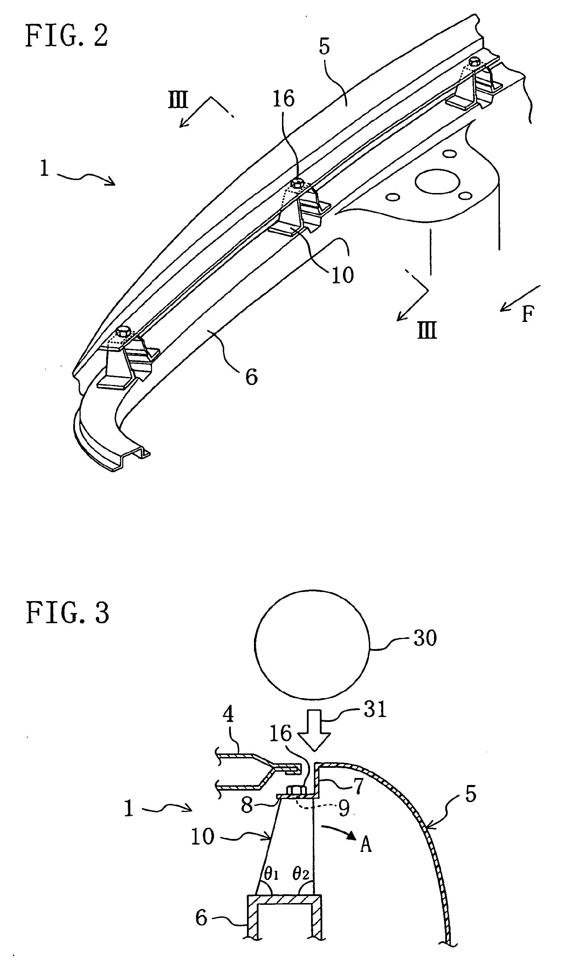

Symmetric right and left front fender panels **5** are provided on the sides in the car width direction of the bonnet **4.** As shown in FIG. **2****,** each front fender panel **5** is supported by a wheel apron reinforcement **6** as a structural member of the automobile extending in the lengthwise direction of the vehicle. The arrow F in the drawings indicates the front side of the automobile.

In detail, as shown in FIG. **3****,** an inner vertical wall portion **7** bent so as to be substantially perpendicular and a mounting flange portion **8** continuing from the inner vertical wall portion **7** so as to be substantially horizontal are formed at the inboard edge of the front fender panel **5.** In the mounting flange portion **8,** bolt receiving holes **9** are formed at predetermine intervals. Each front fender panel **5** is formed by molding a resin.

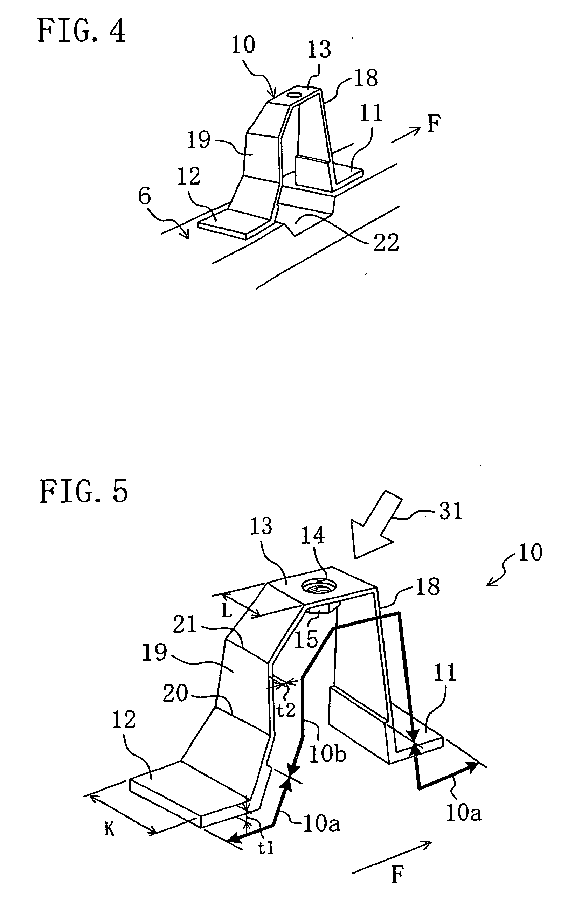

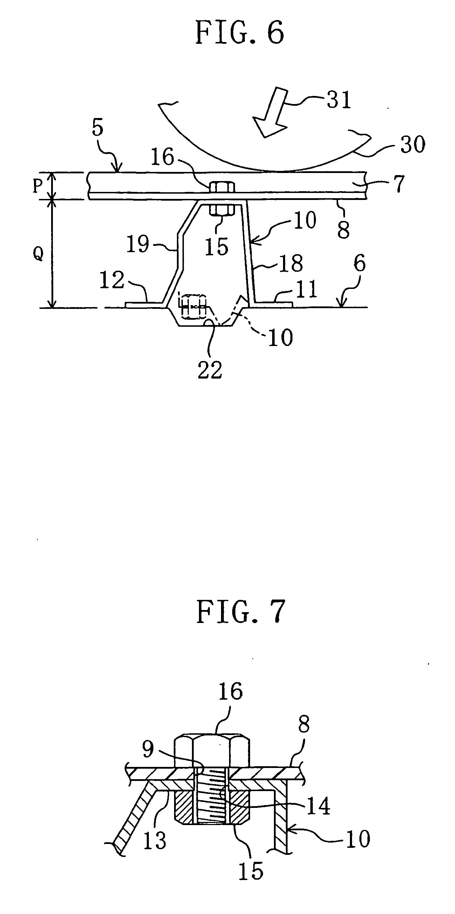

As shown in FIG. **4** through to FIG. **7****,** fender mounting brackets **10** made of metal and having a hat-like shape in section are fixed at parts of the wheel apron reinforcement **6** which correspond to the bolt receiving holes **9** of the mounting flange portion **8.**

Specifically, each fender mounting bracket **10** includes at the lower part thereof a pair of grounding parts **11, 12.** The grounding parts **11, 12** are formed horizontally and are fixed in line in the lengthwise direction of the vehicle by welding them to the upper face of the wheel apron reinforcement **6.**

Further, at the upper part of each fender mounting bracket **10,** a flat fender mounting part **13** is formed to which the fender panel **5** is mounted. In the fender mounting part **13,** a through hole **14** is formed which corresponds to a bolt receiving hole **9** of the mounting flange portion **8** of the fender panel **5.** A weldnut **15** is welded correspondingly to the through hole **14** in the reverse face of the fender mounting part **14.** In order to increase impact energy absorbency, the width in the car width direction of the fender mounting part **13** is set not so large, specifically, set large enough for the weldnut **15** to be welded.

When bolts **16** as joint members are inserted into a bolt receiving holes **9** of the mounting flange portion **8** and the through holes **14** of the fender mounting parts **13** of the fender mounting brackets **10** and are fastened with the weldnuts **15,** the fender panel **5** is mounted to the fender mounting brackets **10.** The length of the bolt **16** is desirably set so that the level of the tip end thereof is equal to the lower face of the weldnut **15,** as shown in FIG. **7****.**

A pair of front side and rear side standing main bodies **18, 19** are formed between the fender mounting part **13** and the respective grounding parts **11, 12** of each fender mounting bracket **10.** The front side standing main body **18** extends linearly from the grounding part **11** to continue to the fender mounting part **13.** On the other hand, the rear side standing main body **19** is bent to form two lines of first and second edge lines **20, 21** extending in the car width direction between the grounding part **12** and the fender mounting part **13.** In each of the front side and rear side standing main bodies **18, 19,** part lower than the first edge line **20** has a thickness t1 equal to the thickness of the grounding parts **11, 12** (indicated at **10a** in FIG. **5**) and part upper than such the lower part has a thickness t2 smaller than the thickness t1 and equal to the thickness of the fender mounting part **13** (indicated at **10b** in FIG. **5**). For example, the fender mounting brackets **10** can be formed by joining by welding the lower thick parts **10a** subjected to pressing and bending and the upper thin part **10b** subjected to pressing and formation of the first and second edge lines **20, 21.**

As shown in FIG. **3****,** when viewing each fender mounting bracket **10** in the lengthwise direction of the vehicle, the inboard side face of the standing main body **18** or **19** and the mounting face of the wheel apron reinforcement **6** form an angle θ1 while the outboard side face of the standing main body **18** or **19** and the mounting face of the wheel apron reinforcement **6** form an angle θ2, wherein the angle θ1 is set smaller than the angle θ2 (θ1<θ2). It is noted that both of the angles θ1 and θ2 are equal to or smaller than 90 degree.

As also shown in FIG. **5**, a width L at upper part of each standing main body **18**, **19** of each fender mounting bracket **10** is set smaller than a width K at lower part thereof (L<K).

By so setting, the rigidity at the upper part of each fender mounting bracket **10** is set smaller than that at the lower part thereof.

Further, as shown in FIG. **6**, the relationship Q/P between the height Q of the standing main bodies **18**, **19** and the height **P** of the inner vertical wall portion **7** of the front fender panel **5** is set larger than 1 (Q/P≥1), preferably, set larger than **2**.

A bracket accommodating concave portion **22** lower in level than the periphery thereof is formed in the surface portion of the wheel apron reinforcement **6** between the grounding parts **11**, **12**. The bracket accommodating concave portion **22** forms a space having a depth deep enough to accommodate the bolt **16** and the fender mounting bracket **10** which have been plastically deformed upon impact application to the fender panel **5**.

### -Operation-

Operations of the fender panel mounting structure **1** according to the present embodiment will be described next.

### (At collision with pedestrian from diagonal front)

Consider the case where a head **30** of a pedestrian collides from a diagonal front with the vicinity of the boundary between the fender panel **5** and the bonnet **4**, as indicated by the open arrow **31** in FIG. **3** and FIG. **6**.

First, since the rigidity at the upper part of each standing main body **18**, **19** is set smaller than the rigidity at the lower part thereof, the upper parts of the standing main bodies **18**, **19**, are readily plastically deformed especially along the edge lines **20**, **21** of the fender mounting bracket **10** as centers at the collision with the head **30** of the pedestrian from the diagonal front.

The grounding parts **11, 12** of the fender mounting brackets **10** are fixed in line in the lengthwise direction of the vehicle to the wheel apron reinforcement **6** of the automobile and, therefore, can be collapsed in the lengthwise direction of the vehicle.

Further, the inboard side face of each fender mounting bracket **10** is inclined outboard with respect to the mounting face of the wheel apron reinforcement **6** while the outboard side face of each fender mounting bracket **10** is not inclined inboard so largely, so that the fender mounting bracket **10** is prevented from falling inboard but can fall in the direction indicated by the arrow A in FIG. **3****.**

Moreover, as indicated by the two dot chain line in FIG. 6, the bolt **16** for fixing the fender panel **5** to the fender mounting bracket **10** is accommodated into the bracket accommodating concave portion **22** together with the fender mounting bracket **10** which has been plastically deformed upon impact application to the fender panel **5,** so that the bolt **16** and the fender mounting bracket **10** do not inhibit absorption of the impact energy.

### (At sideways load application)

When a sideways load is applied due to, for example, human's leaning to the fender panel **5** or the like, the bending moment is applied to the fender mounting bracket **10.** However, since the section modulus at the lower part of each standing main body **18, 19** is large because of the high rigidity at the lower part thereof, the fender mounting brackets **10** can withstand such bending moment application.

### -Effects of Embodiment-

As described above, in the fender panel mounting structure **1** according to the present embodiment, the width and the thickness at the upper part of each fender mounting bracket **10** is set smaller than those at the lower part thereof to set the rigidity at the upper part of each fender mounting bracket **10** smaller than that at the lower part thereof. This can attain easy plastic deformation of the upper part at a collision with a pedestrian from a diagonal front and can cope with the bending moment which would be caused by a sideways load. Hence, with such a simple structure, the direction in which the fender mounting bracket **10** is collapsed at a collision with a pedestrian from a diagonal front can be stabilized, attaining efficient absorption of the impact energy. Further, the rigidity against sideways force which would be applied to the fender panel **5** can be ensued.

Further, the inboard side face of each fender mounting bracket **10** is inclined outboard with respect to the mounting face of the wheel apron reinforcement **6** so that the fender mounting bracket **10** is prevented from falling inboard at a collision with a pedestrian from a diagonal front. This enables efficient absorption of the impact energy without involving inhibition of deformation of the bonnet **4** by the fender mounting brackets **10.**

Moreover, the rear side standing main body **19** is bent to form the edge lines **20, 21** extending in the car width direction so that parts at the edge lines **20, 21** are especially readily deformed in the lengthwise direction of the vehicle at a collision with a pedestrian from a diagonal front. This further stabilizes the direction in which the fender mounting brackets **10** are collapsed at a collision with a pedestrian from a diagonal front while the fender mounting brackets **10** do not inhibit deformation of the bonnet **4.** Hence, the impact energy can be absorbed efficiently.

Furthermore, the bracket accommodating concave portion **22** is formed in the surface portion of the wheel apron reinforcement **6** between the grounding parts **11, 12** of each fender mounding bracket **10** so as to accommodate the bolt **16** and the fender mounting bracket **10** which has been plastically deformed upon impact application to the fender panel **5.** Thus, the space for letting off the bolt **16** and the deformed fender mounting bracket **10** can be reserved, enabling further efficient absorption of the impact energy at a collision with a pedestrian from a diagonal front.

In addition, the fender panel **5** is formed by molding a resin, and the fender mounting brackets **10** are made of metal. This simple structure increases the impact energy absorbency even with the fender panel **5** of which rigidity is lowered.

### (Other Embodiments)

The present invention may have any of the following structures in the above embodiment.

Namely, in the above embodiment, the two edge lines **20, 21** are formed in the rear side standing main body **19,** but only one or three or more edge lines may be formed. One or more edge lines may be formed also in the front side standing main body **18.**

In the above embodiment, the front fender panel **5** is formed by molding a resin but may be made of metal.

The fender mounting brackets **10** are made of metal in the above embodiment but may be made of a filler reinforced plastic such as a filler reinforced nylon with which a filler (glass fiber, talc, or the like) is mixed. In a case employing glass fiber, the direction in which the fender mounting bracket is collapsed can be stabilized by aligning the fibers of the glass fiber in the car width direction.

In the above embodiments, both the width and the thickness at the upper parts of the fender mounting brackets **10** are set smaller than those at the lower parts thereof. However, only one of the width and the thickness at the upper parts of the fender mounting brackets **10** may be set smaller than that at the lower parts thereof.

## Claims

1. A fender panel mounting structure **(1)** of an automobile for mounting a fender panel **(5)** to a structural member **(6)** of the automobile, comprising:
a fender mounting bracket **(10)** in a hat-like shape in section, the fender mounting bracket **(10)** including a pair of grounding parts **(11, 12)** at a lower part thereof which are fixed in line in a lengthwise direction of a vehicle to the structural member **(6),** a fender mounting part **(13)** at an upper part thereof to which the fender panel **(5)** is mounted, and standing main bodies **(18, 19)** between the fender mounting part **(13)** and the respective grounding parts **(11, 12),**
**characterized by**
at least one of a width and a thickness at upper parts of the standing main bodies **(18, 19)** of the fender mounting bracket **(10)** being set smaller than that at lower parts thereof, and
at least a standing main body **(19)** located on a rear side in the lengthwise direction of the vehicle being bent so as to form a plurality of edge lines **(20, 21)** extending in a car width direction in an upper part of the standing main body **(19)** of which at least one of the width and the thickness is set smaller than that of the lower part thereof, thereby being plastically deformed at a collision from a diagonal front.

2. The fender panel mounting structure **(1)** of Claim 1,
wherein when viewing the fender mounting bracket **(10)** in the lengthwise direction of the vehicle, an angle (θ**1**) formed between an inboard side face of each standing main body **(18, 19)** and a mounting face of the structural member **(6)** is set smaller than an angle (θ**2**) formed between an outboard side face of each standing main body **(18, 19)** and the mounting face of the structural member **(6)** (θ**1**<θ**2**), and
the width **(L)** at the upper parts of the standing main bodies **(18, 19)** of the fender mounting bracket **(10)** is set smaller than the width **(K)** at the lower parts thereof **(L<K).**

3. The fender panel mounting structure **(1)** of Claim 1 or 2,
wherein the fender panel **(5)** is joined to the fender mounting part **(13)** of the fender mounting bracket **(10)** by means of a joint member **(16),** and
a bracket accommodating concave portion **(22)** is formed in a surface portion of the structural member **(6)** between the grounding parts **(11, 12),** the bracket accommodating concave portion **(22)** being capable of accommodating the joint member **(16)** and the fender mounting bracket **(10)** which has been plastically deformed upon impact application to the fender panel **(5).**

4. The fender panel mounting structure **(1)** of any one of Claims 1 to 3,
wherein the fender panel **(5)** is formed by molding a resin, and
the fender mounting bracket **(10)** is made of metal.

## Patentansprüche

1. Kotflügelblech-Befestigungsstruktur (1) eines Kraftfahrzeugs zum Befestigen eines Kotflügelblechs (5) an einem Bauelement (6) des Kraftfahrzeugs, welche umfasst:
einen Kotflügel-Befestigungswinkel (10) in einer im Schnitt hutartigen Form, wobei der Kotflügel-Befestigungswinkel (10) an einem unteren Ende desselben ein Paar von Anschlussteilen (11, 12), die in einer Längsrichtung eines Fahrzeugs an dem Bauelement (6) in Linie angebracht sind, einen Kotflügel-Befestigungsteil (13) an einem oberen Ende desselben, an dem das Kotflügelblech (5) befestigt ist, und aufrechte Hauptkörper (18, 19) zwischen dem Kotflügel-Befestigungsteil (13) und den jeweiligen Anschlussteilen (11, 12) umfasst,
**dadurch gekennzeichnet, dass**
mindestens eines von: einer Breite und einer Dicke an oberen Teilen der aufrechten Hauptkörper (18, 19) des Kotflügel-Befestigungswinkels (10) kleiner als die an unteren Teilen derselben festgelegt ist, und
mindestens ein aufrechter Hauptkörper (19), der sich in der Längsrichtung des Fahrzeugs an einer Rückseite befindet, so gebogen ist, dass er mehrere Kantenlinien (20, 21) bildet, die sich in einer Wagenbreitenrichtung in einem oberen Teil des aufrechten Hauptkörpers (19) erstrecken, dessen mindestens eine der Breite und Dicke kleiner als die des unteren Teils desselben festgelegt ist, wodurch er bei einer Kollision von einer diagonalen Vorderseite plastisch verformt wird.

2. Kotflügelblech-Befestigungsstruktur (1) nach Anspruch 1,
wobei bei Betrachten des Kotflügel-Befestigungswinkels (10) in der Längsrichtung des Fahrzeugs ein Winkel (θ1), der zwischen einer innen liegenden Seitenfläche jedes aufrechten Hauptkörpers (18, 19) und einer Befestigungsfläche des Bauelements (6) ausgebildet ist, kleiner als ein Winkel (θ2) festgelegt ist, der zwischen einer außen liegenden Seitenfläche jedes aufrechten Hauptkörpers (18, 19) und der Befestigungsfläche des Bauelements (6) ausgebildet ist (θ1<θ2), und
wobei die Breite (L) an den oberen Teilen der aufrechten Hauptkörper (18, 19) des Kotflügel-Befestigungswinkels (10) kleiner als die Breite (K) an den unteren Teilen desselben festgelegt ist (L<K).

3. Kotflügelblech-Befestigungsstruktur (1) nach Anspruch 1 oder 2,
wobei das Kotflügelblech (5) mit dem Kotflügel-Befestigungsteil (13) des Kotflügel-Befestigungswinkels (10) mittels eines Verbindungselements (16) verbunden ist und
wobei ein konkaver Winkelaufnahmeabschnitt (22) in einem Flächenabschnitt des Bauelements (6) zwischen den Anschlussteilen (11, 12) ausgebildet ist, wobei der konkave Winkelaufnahmeabschnitt (22) das Verbindungselement (16) und den Kotflügel-Befestigungswinkel (10) aufnehmen kann, der bei Ausüben von Aufprall auf das Kotflügelblech (5) plastisch verformt wurde.

4. Kotflügelblech-Befestigungsstruktur (1) nach einem der Ansprüche 1 bis 3, wobei das Kotflügelblech (5) durch Formen eines Harzes gebildet ist und der Kotflügel-Befestigungswinkel (10) aus Metall besteht.

## Revendications

1. Une structure de montage pour aile de carrosserie **(1)** d'une automobile destinée au montage d'une aile de carrosserie **(5)** à un élément structurel **(6)** de l'automobile, comprenant :
un support de montage d'aile **(10)** en forme de chapeau dans la section, le support de montage d'aile **(10)** comportant une paire de pièces de mise à la terre **(11, 12)** sur une partie inférieure de celui-ci qui est fixée de manière alignée dans une direction longitudinale d'un véhicule à l'élément structurel **(6),** une pièce de montage d'aile **(13)** sur une partie supérieure de celui-ci à laquelle l'aile de carrosserie **(5)** est montée, et des corps principaux dressés **(18, 19)** entre la pièce de montage d'aile **(13)** et les pièces de mise à la terre respectives **(11, 12),**
**caractérisée par**
au moins soit une largeur et une épaisseur sur les parties supérieures des corps principaux dressés **(18, 19)** du support de montage d'aile **(10)** étant configurée plus petite que celle sur les parties inférieures de celui-ci, et
au moins un corps principal dressé **(19)** situé sur un côté arrière dans la direction longitudinale du véhicule étant agencé de manière à former une pluralité d'arêtes **(20, 21)** s'étendant dans une direction transversale de la voiture dans une partie supérieure du corps principal dressé **(19)** duquel au moins soit la largeur et
l'épaisseur de celui-ci est configurée plus petite que celle sur les parties inférieures de celui-ci, étant ainsi déformé plastiquement lors d'une collision à partir d'une partie avant diagonale.

2. La structure de montage pour aile de carrosserie **(1)** de la revendication 1,
dans laquelle en observant le support de montage d'aile **(10)** dans la direction longitudinale du véhicule, un angle **(**θ**1)** formé entre une face du côté intérieur de chaque corps principal dressé **(18, 19)** et une face de montage de l'élément structurel **(6)** est configuré plus petit qu'un angle **(**θ**2)** formé entre une face du côté extérieur de chaque corps principal dressé **(18, 19)** et la face de montage de l'élément structurel **(6) (**θ**1<**θ**2)**, et
la largeur **(L)** des parties supérieures des corps principaux dressés **(18,19)** du support de montage d'aile **(10)** est configurée plus petite que la largeur **(K)** sur les parties inférieures de celui-ci **(L<K).**

3. La structure de montage pour aile de carrosserie **(1)** de la revendication 1 ou 2,
dans laquelle l'aile de carrosserie **(5)** est reliée à la pièce de montage d'aile **(13)** du support de montage d'aile **(10)** au moyen d'un élément de liaison **(16),** et
un élément concave d'adaptation du support **(22)** est formé dans une partie de surface de l'élément structurel **(6)** entre les pièces de mise à la terre **(11, 12),** l'élément concave d'adaptation du support **(22)** étant capable d'adapter l'élément de liaison **(16)** et le support de montage d'aile **(10)** qui a été déformé plastiquement sous application d'un impact à l'aile de carrosserie **(5).**

4. La structure de montage pour aile de carrosserie **(1)** d'une quelconque des revendications 1 à 3, dans laquelle l'aile de carrosserie **(5)** est formée par le moulage d'une résine, et le support de montage d'aile **(10)** est fabriqué en métal.
